# EUROPÄISCHE PATENTSCHRIFT

(11) **EP 0 513 003 B1**
(45) Veröffentlichungstag und Bekanntmachung des Hinweises auf die Patenterteilung: **04.05.1994**
(21) Anmeldenummer: 91900178.4
(22) Anmeldetag: 19.12.1990
(51) Int. Cl.: B25F 5/02, H02K 9/06

(54) **HANDGEFÜHRTE WERKZEUGMASCHINE MIT RADIALGEBLÄSE**
HAND MACHINE-TOOL WITH RADIAL FAN
MACHINE-OUTIL COMMANDEE A LA MAIN AVEC SOUFFLANTE RADIALE

(30) Priorität: 02.02.1990 DE 4003029
(43) Veröffentlichungstag der Anmeldung: 19.11.1992
(73) Patentinhaber: ROBERT BOSCH GMBH, 70442 Stuttgart (DE)
(72) Erfinder: KUMMER, Martin, D-7024 Filderstadt 1 (DE); RIEKER, Werner, D-7035 Waldenbuch (DE); STRÖTGEN, Eckerhard, D-7035 Waldenbuch (DE); PRAHST, Eberhard, D-7307 Aichwald 3 (DE)
(86) Internationale Anmeldenummer: DE9000972
(87) Internationale Veröffentlichungsnummer: WO9111297

(56) Entgegenhaltungen:
- EP-A- 074 068
- DE-A- 3 318 199
- DE-U- 7 404 632
- DE-U- 8 601 684
- FR-A- 337 310
- FR-A- 716 885
- FR-E- 03 190
- GB-A- 334 717
- GB-A- 643 796
- US-A- 2 777 079
- US-A- 4 859 886

## Beschreibung

Die Erfindung geht aus von einer von Hand führbaren elektrischen Werkzeugmaschine nach der Gattung des Anspruchs 1. Es sind bereits Handwerkzeugmaschinen wie Bohrmaschinen, Winkelschleifer oder Handkreissägen mit Radialgebläsen für die Motorkühlung bekannt. Die Luftführungskanäle solcher Maschinen sind wie z.B. bei dem Bohrhammer gemäß DE-A-35 03 172 mehr oder weniger kreisringförmig um das Lüfterrad herum angeordnet und dienen lediglich der Sammlung und gebündelten Abfuhr der Luft. Diese tritt dann durch im Gehäuse angeordnete Kühlluftschlitze aus. Nicht zuletzt wegen der bei Handwerkzeugmaschinen engen Platzverhältnisse sind die Kanäle wenig strömungsgünstig gestaltet, insbesondere wird der je nach Lüfterbauart teils sehr hohe dynamische Druckanteil nicht ausgenutzt. Dies führt des weiteren wegen der hohen Geschwindigkeit der austretenden Luft häufig zu Belästigungen der Bedienungsperson.

### Vorteile der Erfindung

Die erfindungsgemäße von Hand führbare elektrische Werkzeugmaschine mit den kennzeichnenden Merkmalen des Anspruchs 1 hat demgegenüber den Vorteil, daß der von dem Radialgebläse geförderte Luftvolumenstrom erheblich gesteigert und die Geräuschentwicklung vermindert wird. Dies wird dadurch erreicht, daß der von dem Lüfterrad erzeugte dynamische Druck des geförderten Luftstroms in einem sich erweiternden Luftführungskanal in statischen also luftfördernden Druck umgewandelt wird. Die verbesserte Luftförderung des erfindungsgemäßen Radialgebläses kann entweder zur Verringerung der Kühlquerschnitte oder zur Verkleinerung des Motors oder zu einer erhöhten Leistungsabgabe des Motors ausgenutzt werden. Bei geringerer Steigerung der Kühlluftmenge kann die Geräuschentwicklung stärker reduziert werden.

Durch die in den abhängigen Ansprüchen aufgeführten Maßnahmen sind vorteilhafte Weiterbildungen und Verbesserungen der erfindungsgemäßen Werkzeugmaschine möglich. Bei den begrenzten Platzverhältnissen in Handwerkzeugmaschinen ist es besonders vorteilhaft, wenn sich der Luftführungskanal in Strömungsrichtung auch oder ausschließlich axial erweitert, da dadurch der Durchmesser des Motorgehäuses nicht vergrößert wird. Auch die Anordnung mehrerer Kanalabschnitte über den Umfang des Lüfterrades erlaubt eine Anpassung der fördervolumensteigernden Luftführung an beengte Platzverhältnisse. Vorteilhaft ist es weiterhin, die bereits erreichte Volumenstromerhöhung durch die Anordnung einer diffusorartigen Mündung hinter dem Luftführungskanal weiter zu steigern und gleichzeitig die Geräuschentwicklung zu vermindern.

### Zeichnung

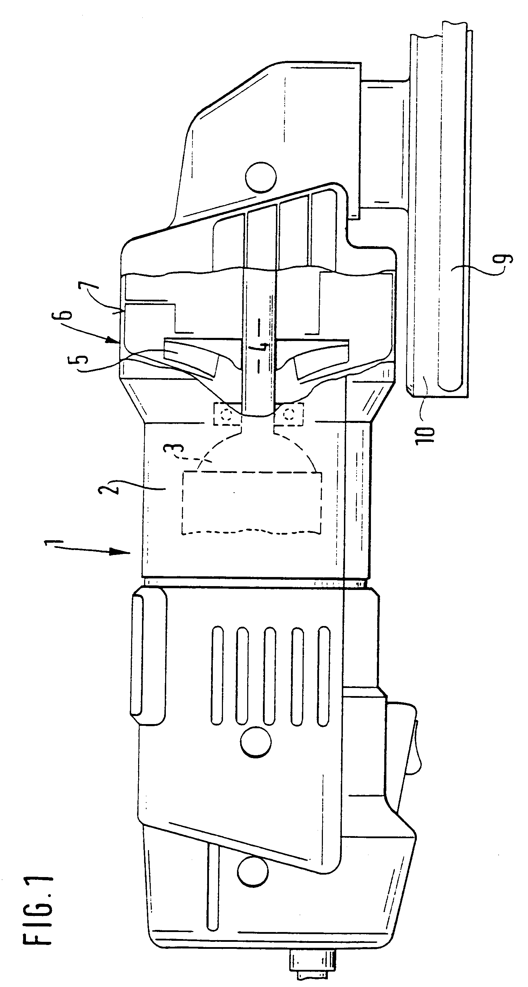

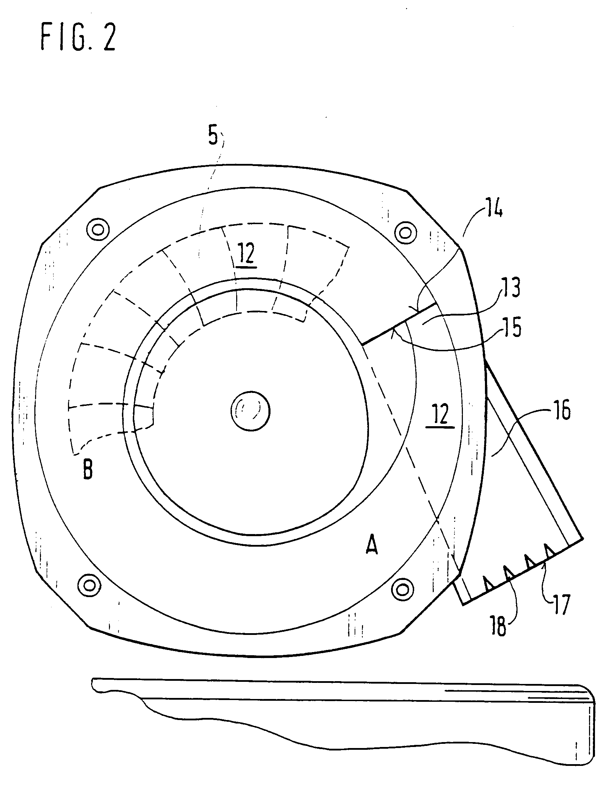

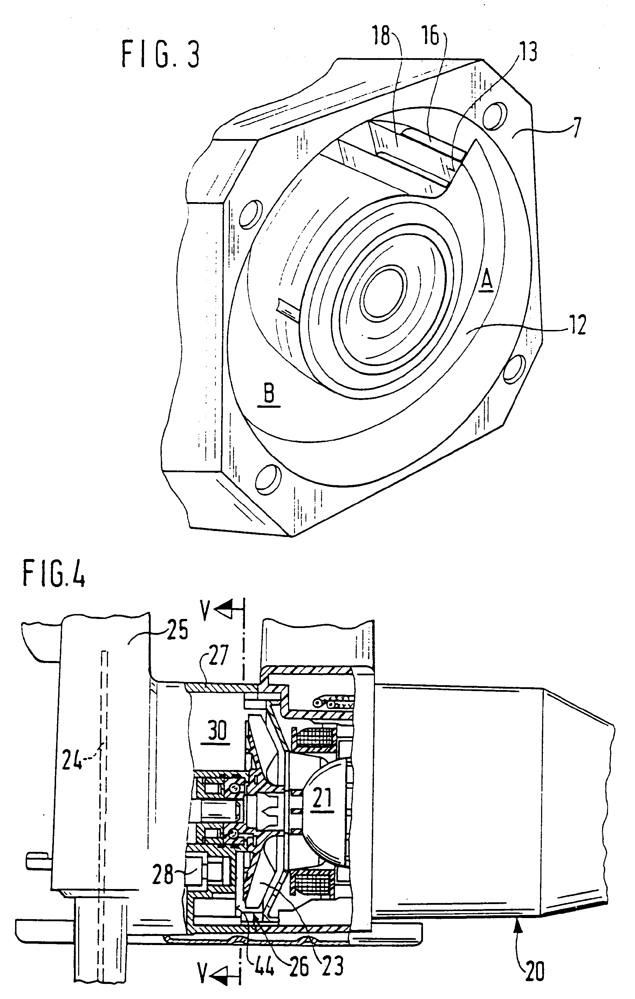

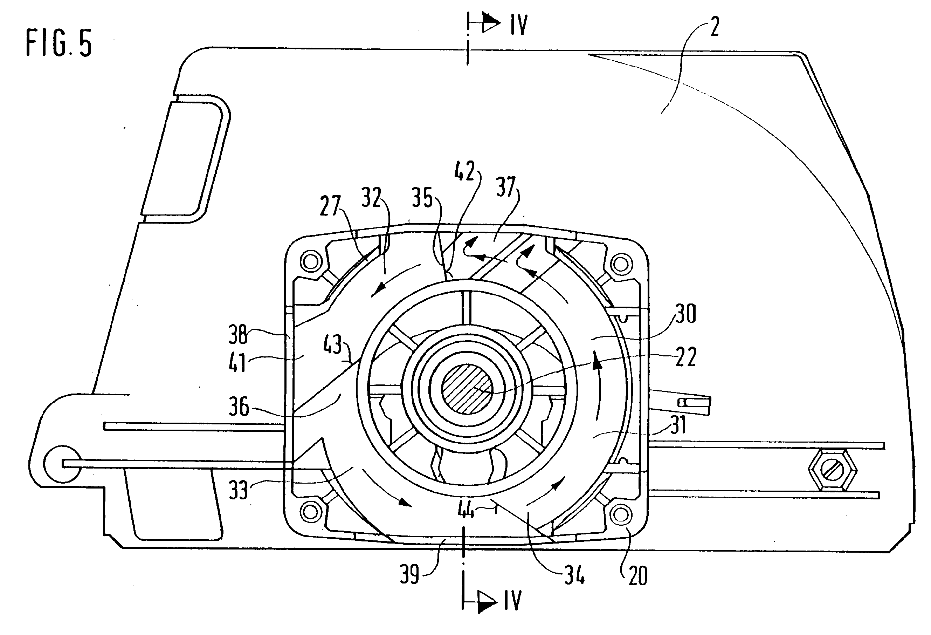

Zwei Ausführungsbeispiele der Erfindung sind in der Zeichnung dargestellt und in der nachfolgenden Beschreibung näher erläutert. Figur 1 zeigt eine teils geschnittene Werkzeugmaschine, Figur 2 zeigt eine Draufsicht auf das Luftführungsgehäuse vom Lüfterrad her gesehen und Figur 3 zeigt eine perspektivische Ansicht des Luftführungskanals. Figur 4 zeigt einen Längsschnitt und Figur 5 zeigt einen Schnitt gemäß Linie V-V in Figur 4 eines zweiten Ausführungsbeispiels.

### Beschreibung der Ausführungsbeispiele

Als Beispiel einer von Hand geführten Werkzeugmaschine ist ein Winkelschleifer 1 dargestellt mit einem Gehäuse 2, in dem ein elektrischer Motor 3 untergebracht ist. Seine Welle 4 dient auch als Welle für ein Lüfterrad 5 eines Radialgebläses 6. Dieses ist in einem sich an das Gehäuse des Motors 3 anschließenden Luftführungs gehäuse 7 untergebracht. Die Drehbewegung des Motors 3 wird von der Welle 4 über ein nicht gezeigtes Winkelgetriebe auf das Werkzeug, eine Schleifscheibe 9 übertragen. Die Schleifscheibe 9 ist teilweise abgedeckt durch eine Schutzhaube 10.

In dem Luftführungsgehäuse 7 befindet sich ein teils in einer etwa senkrecht zur Welle 4 des Lüfterrades liegenden Ebene spiralig gewundener Luftführungskanal 12, der einen Winkel von 360° umschließt (siehe Figur 2). Dieser ist in Achsrichtung der Welle 4 wendelförmig geformt. Er ist in das Luftführungsgehäuse 7 eingeformt, wobei seine radial äußere Wand zylindermantelförmig ist. In axialer Richtung wird der Luftführungskanal 12 zu Beginn von einer vorteilhafterweise scharf zugespitzen, sich mit ihrer freien Kante in radialer Richtung zur Achse der Welle 4 des Lüfterrades erstreckenden Zunge 13 begrenzt (siehe auch Figur 3). An der Zunge 13 befindet sich die Eintrittsöffnung 14 des Luftführungskanals 12. Ihr in radialer Richtung gemessener Querschnitt ist sowohl in axialer wie auch in radialer Erstreckung gering.

In einem ersten, sich etwa über 120 Grad erstreckenden Abschnitt A erweitert sich der Luftführungskanal 12 in radialer Richtung spiralförmig nach innen. Außerdem erweitert er sich in axialer Richtung vom Lüfterrad weg. Im auf den ersten Abschnitt A folgenden Abschnitt B weist der Luftführungskanal 12 in radialer Richtung eine konstante Breite auf, während er sich in axialer Richtung fortlaufend kontinuierlich erweitert. Am Ende des Abschnitts B liegt eine Austrittsöffnung 15 mit gegenüber der Eintrittsöffnung 14 in radialer Richtung gemessen vorzugsweise um den Faktor 6 bis 10 größeren Querschnitt. Je nach Gebläsebauart liegt das Verhältnis der Querschnitte von Eintritts- zu Austrittsöffnung zwischen 1 : 4 und 1 : 16. Die Austrittsöffnung 15 liegt in axialer Richtung versetzt weiter von dem Lüfterrad 5 entfernt als die Eintrittsöffnung 14, so daß sich Anfang und Ende des Luftführungskanals 12 axial überdecken können. An die Austrittsöffnung 15 schließt sich eine diffusorartige Mündung 16 an, die von einem etwa tangential von dem wendelförmigen Luftführungskanal 12 weggerichteten Kanalstück gebildet wird und vom Lüfterrad 5 aus gesehen axial teilweise hinter dem Abschnitt A des Luftführungskanals 12 liegt. Auch die Mündung 16 erweitert sich allmählich und kontinuierlich bis zu ihrem Ende 17. Dieses kann aus Arbeitsschutzgründen mit schmalen Rippen 18 versehen sein, um ein Eingreifen in den Luftführungskanal 12 mit dem Finger und die damit verbundene Verletzungsgefahr zu verhindern.

Das Radialgebläse 6 saugt Kühlluft durch den Motor 3 hindurch an, die von der Motorseite her zentral in das Lüfterrad 5 eintritt. Im Lüfterrad 5 wird sowohl der dynamische als auch der statische Druck der geförderten Luft erhöht. Die Kühlwirkung wächst mit der Größe des Luftvolumenstroms. Die Größe des Luftvolumenstroms wird von der statischen Druckdifferenz des Radialgebläses 6 bestimmt. Die Erfindung beruht nun darauf, den dynamischen Druckanteil, der von einer erhöhten Geschwindigkeit des geförderten Mediums hervorgerufen wird, durch Geschwindigkeitsreduzierung in einen statischen, also luftfördernden Druck umzuwandeln. Dies geschieht durch den in Strömumgsrichtung sich stetig erweiternden, also im Querschnitt größer werdenden oder zumindest gleichbleibenden Luftführungskanal 12, der die Luft nicht nur wie bei bisherigen Gebläsen sammelt, sondern auch gezielt zu einem Geschwindigkeitsabbau der Förderluft führt. Dies wird am besten in einem sich kontinuierlich erweiternden Kanal erreicht. Die Wirkung kann sowohl mit einer radialen, spiralförmigen Erweiterung als auch mit einer axialen, wendelförmigen Erweiterung sowie auch mit einer Kombination aus beiden Maßnahmen erreicht werden. Je nach den Platzverhältnissen in der Werkzeugmaschine kann der Luftführungskanal beispielsweise auch nach radial innen erweitert werden.

Im zweiten Ausführungsbeispiel nach Figur 4 und 5 ist eine Handkreissäge gezeigt. In einem Gehäuse 20 ist ein Motor 21 mit auf die Motorwelle 22 aufgestecktem Lüfterrad 23 sowie ein Sägeblatt 24 untergebracht. Auch hier wird ein Radialgebläse 26 von dem Lüfterrad 23 und einem Luftführungsgehäuse 27 gebildet, das in das Gehäuse 20 integriert ist. Das Luftführungsgehäuse 27 ist in seiner räumlichen Ausdehnung durch ein Getriebe 28 zwischen der Motorwelle 22 und der Welle des Sägeblattes 24 beschränkt. Daher ist ein Luftführungskanal 30 hier auch nicht als zusammenhängende, sich über 360° stetig erweiternde Wendel ausführbar. Statt dessen sind drei aneinander anschließende Kanalabschnitte 31 bis 33 gebildet, von denen sich jeder einzelne von seiner Eintrittsöffnung 34 bzw. 35 bzw. 36 zu seiner im Querschnitt weiteren Austrittsöffnung 37 bzw. 38 bzw. 39 stetig erweitert. Der erste Kanalabschnitt 31 verläuft über einen Winkelbereich von ca. 160° von seiner Eintrittsöffnung 34 in axialer Erweiterung bis zu seiner Austrittsöffnung 37 und mündet seitlich in das Schutzgehäuse 25. Der zweite, sich etwa über ca. 90° erstreckende Kanalabschnitt 32 erweitert sich ebenfalls axial und weist eine diffusorartige Mündung 41 auf. Der dritte Kanalabschnitt 33 erweitert sich über ca. 110° spiralförmig und weist in axialer Richtung eine relativ geringe konstante Tiefe auf. Die Luft tritt tangential durch die Austrittsöffnung 39 im Luftführungsgehäuse 27 aus. Die Eintrittsöffnungen 34, 35, 36 sind jeweils durch Zungen 42, 43, 44 begrenzt, die teils in radialer Richtung schräg stehen.

Die Funktion des Radialgebläses 26 entspricht der des ersten Ausführungsbeispiels nur mit dem Unterschied, daß die Wegstrecke, auf der der dynamische Druck abgebaut wird, auf mehrere Teilabschnitte aufgeteilt ist. Mit einer Kombination aus geeignet langen, vorteilhafterweise zusammen einen Winkel von 360° einschließenden Kanalabschnitten läßt sich ein maximaler Volumendurchsatz erzielen. Bei passender Anordnung der sich nach Möglichkeit entweder radial und/oder axial erweiternden Abschnitte, die sich auch axial überdecken können, läßt sich jedes Radialgebläse einer Handwerkzeugmaschine so ausgestalten, daß damit eine maximale Kühlwirkung erreicht wird.

Das optimale Verhältnis der Querschnitte von Eintritts- zu Austrittsöffnung verringert sich gegenüber dem ersten Ausführungsbeispiel im Verhältnis des überdeckten Winkels zum vollen Winkel von 360°. Bei sich über beispielsweise 90° erstreckenden Kanalabschnitten beträgt das Verhältnis also vorzugsweise 1 : 1,5 bis 1 : 2,5.

## Patentansprüche

1. Von Hand führbare elektrische Werkzeugmaschine mit Gehäuse (2,20), Motor (3,21) zum Antrieb eines Werkzeugs und Radialgebläse (6,26), insbesondere zur Kühlung des Motors, das ein Lüfterrad (5,23) zum Aufbau einer statischen Druckdifferenz aufweist, und mit einem Luftführungskanal (12,30) innerhalb des Gehäuses, dadurch gekennzeichnet, daß der Luftführungskanal (12,30) sich zu seiner Austrittsöffnung (15,39) hin im Querschnitt stetig er weitert, wobei der in radialer Richtung gemessene Querschnitt der Eintrittsöffnung (14,34) des Luftführungskanals (12,30) kleiner ist, als der Querschnitt der Austrittsöffnung (15,39).

2. Werkzeugmaschine nach Anspruch 1, dadurch gekennzeichnet, daß sich der Luftführungskanal (12) in Richtung der Welle (4) des Lüfterrades (5) wendelförmig erweitert.

3. Werkzeugmaschine nach Anspruch 1 oder 2, dadurch gekennzeichnet, daß sich der Luftführungskanal (12) in radialer Richtung des Lüfterrades (5) spiralförmig erweitert.

4. Werkzeugmaschine nach Anspruch 3, dadurch gekennzeichnet, daß sich der Luftführungskanal (12) in radialer Richtung des Lüfterrades (5) spiralförmig nach innen zur Welle (4) des Lüfterrades (5) hin erweitert.

5. Werkzeugmaschine nach Anspruch 1, dadurch gekennzeichnet, daß das Verhältnis der in radialer Richtung gemessenen Querschnitte von Eintritts- (14) zu Austrittsöffnung (15) im Bereich zwischen 1 : 4 bis 1 : 16, vorzugsweise 1 : 6 bis 1 : 10 liegt.

6. Werkzeugmaschine nach einem der vorhergehenden Ansprüche, dadurch gekennzeichnet, daß der Luftführungskanal (30) mehrere sich stetig erweiternde Kanalabschnitte (31, 32, 33) mit eigenen Eintritts- (34, 35, 36) und Austrittsöffnungen (37, 38, 39) aufweist, die sich jeweils über weniger als 360° erstrecken.

7. Werkzeugmaschine nach Anspruch 6, dadurch gekennzeichnet, daß die Eintrittsöffnungen (34, 35, 36) von vorzugsweise in radialer Richtung schräg verlaufenden Zungen (42, 43, 44) begrenzt werden.

8. Werkzeugmaschine nach einem der Ansprüche 6 oder 7, dadurch gekennzeichnet, daß die Kanalabschnitte (31, 32, 33) zusammengenommen einen Winkel von etwa 360° einschließen.

9. Werkzeugmaschine nach einem der vorhergehenden Ansprüche, dadurch gekennzeichnet, daß sich an den Luftführungskanal bzw. Kanalabschnitt (12, 32) eine diffusorartige Mündung (16, 41) anschließt.

10. Werkzeugmaschine nach einem der vorhergehenden Ansprüche, dadurch gekennzeichnet, daß die Mündung (16, 41) des Luftführungskanals (12, 32) von einem tangential von diesem weggerichteten Kanalstück gebildet wird.

11. Werkzeugmaschine nach einem der vorhergehenden Ansprüche, dadurch gekennzeichnet, daß die Austrittsöffnung (15,39) des Luftführungskanals (12,30) gegenüber seiner Eintrittsöffnung (14,34) in axialer Richtung versetzt ist.

12. Werkzeugmaschine nach einem der vorhergehenden Ansprüche, dadurch gekennzeichnet, daß die Eintrittsöffnung (14) von einer Zunge (13) begrenzt wird, die mit ihrer Rückseite eine radiale oder axiale Begrenzung der Mündung (16) bildet.

## Claims

1. Hand-guided electric machine tool comprising a casing (2, 20), a motor (3, 21) for driving a tool, and a radial fan (6, 26) which is in particular intended for cooling the motor and which has a fan wheel (5, 23) for building up a static pressure difference, and further comprising an air guide duct (12, 30) inside the casing, characterized in that the air guide duct (12, 30) widens continuously in cross-section towards its outlet opening (15, 39), the cross-section of the inlet opening (14, 34) of the air guide duct (12, 30), measured in the radial direction, being smaller than the cross-section of the outlet opening (15, 39).

2. Machine tool according to Claim 1, characterized in that the air guide duct (12) widens helically in the direction of the shaft (4) of the fan wheel (5).

3. Machine tool according to Claim 1 or 2, characterized in that the air guide duct (12) widens spirally in the radial direction of the fan wheel (5).

4. Machine tool according to Claim 3, characterized in that the air guide duct (12) widens spirally, inwards towards the shaft (4) of the fan wheel (5), in the radial direction of the fan wheel (5).

5. Machine tool according to Claim 1, characterized in that the ratio of the cross-section, measured in the radial direction, of the inlet opening (14) to that of the outlet opening (15) lies in the range between 1 : 4 and 1 : 16, preferably between 1: 6 and 1 : 10.

6. Machine tool according to one of the preceding claims, characterized in that the air guide duct (30) has a plurality of continuously widening duct portions (31, 32, 33) having their own inlet openings (34, 35, 36) and outlet openings (37, 38, 39), each of which extends over less than 360°.

7. Machine tool according to Claim 6, characterized in that the inlet openings (34, 35, 36) are bounded by tongues (42, 43, 44) preferably extending obliquely in the radial direction.

8. Machine tool according to one of Claims 6 and 7, characterized in that the duct portions (31, 32, 33) together enclose an angle of approximately 360°.

9. Machine tool according to one of the preceding claims, characterized in that a diffuser-like mouth (16, 41) adjoins the air guide duct or duct portion (12, 32).

10. Machine tool according to one of the preceding claims, characterized in that the mouth (16, 41) of the air guide duct (12, 32) is formed by a length of duct directed tangentially away from said duct.

11. Machine tool according to one of the preceding claims, characterized in that the outlet opening (15, 39) of the air guide duct (12, 30) is offset in the axial direction relative to its inlet opening (14, 34).

12. Machine tool according to one of the preceding claims, characterized in that the inlet opening (14) is bounded by a tongue (13) whose rear face forms a radial or axial boundary of the mouth (16).

## Revendications

1. Machine-outil électrique à main comprenant un boîtier (2, 20), un moteur (3, 21) pour entraîner l'outil et une soufflante radiale (6, 26), notamment pour refroidir le moteur, qui comporte un rotor (5, 23) pour créer une différence de pression statique et un canal de guidage d'air (12, 30) à l'intérieur du boîtier, machine caractérisée en ce que la section du canal de guidage d'air (12, 30) augmentant en continu vers son orifice de sortie (15, 39) et la section de l'orifice d'entrée (14, 34), mesurée dans la direction radiale pour le canal de guidage d'air (12, 30) est inférieure à la section de l'orifice de sortie (15, 39).

2. Machine-outil selon la revendication 1, caractérisée en ce que le canal de guidage d'air (12) s'élargit en hélice dans la direction de l'arbre (4) du rotor (5).

3. Machine-outil selon la revendication 1 ou 2, caractérisée en ce que le canal de guidage d'air (12) s'élargit en spirale dans la direction radiale du rotor (5).

4. Machine-outil selon la revendication 3, caractérisée en ce que le canal de guidage d'air (12) s'élargit en spirale dans la direction radiale du rotor (5), vers l'intérieur vers l'arbre (4) du rotor (5).

5. Machine-outil selon la revendication 1, caractérisée en ce que le rapport des sections de l'orifice d'entrée (14) et de l'orifice de sortie (15), mesurées dans la direction radiale se situe dans une plage comprise entre 1 : 4 et 1 : 16 et de préférence entre 1 : 6 et 1 : 10.

6. Machine-outil selon l'une des revendications précédentes, caractérisée en ce que le canal de guidage d'air (30) se compose de plusieurs segments de canal (31, 32, 33) s'élargissant en continu avec un orifice d'entrée (34, 35, 36) et un orifice de sortie (37, 38, 39) distincts, s'étendant chaque fois sur moins de 360°.

7. Machine-outil selon la revendication 6, caractérisée en ce que les ouvertures d'entrée (34, 35, 36) sont délimitées par des languettes (42, 43, 44) de préférence en biais par rapport à la direction radiale.

8. Machine-outil selon l'une des revendications 6 ou 7, caractérisée en ce que les segments de canal (31, 32, 33) englobent en tout un angle d'environ 360°.

9. Machine-outil selon l'une des revendications précédentes, caractérisée en ce qu'une embouchure en forme de diffuseur (16, 41) est prévue sur le segment de canal ou le canal de guidage d'air (12, 32).

10. Machine-outil selon l'une des revendications précédentes, caractérisée en ce que l'embouchure (16, 41) du canal de guidage d'air (12, 32) s'écarte tangentiellement de la partie de canal.

11. Machine-outil selon l'une des revendications précédentes, caractérisée en ce que l'orifice de sortie (15, 39) du canal de guidage d'air (12, 30) est décalé dans la direction axiale par rapport à son orifice d'entrée (14, 34).

12. Machine-outil selon l'une des revendications précédentes, caractérisée en ce que l'orifice d'entrée (14) est délimité par une languette (13) qui forme une limite radiale ou axiale de l'embouchure (16) avec sa face arrière.
